# EUROPEAN PATENT APPLICATION

(11) **EP 4 261 515 A1**
(43) Date of publication of application: **18.10.2023**
(21) Application number: 21888990.5
(22) Date of filing: 13.10.2021
(51) Int. Cl.: G01L 19/04

(54) **PRESSURE SENSOR**

(30) Priority: 04.11.2020 JP 2020184277
(71) Applicant: Saginomiya Seisakusho, Inc., Tokyo 165-0033 (JP)
(72) Inventor: TAKIMOTO Kazuya, Sayama-shi, Saitama 350-1395 (JP); TANAKA Tatsuya, Sayama-shi, Saitama 350-1395 (JP); MORITA Masahiro, Sayama-shi, Saitama 350-1395 (JP)
(74) Representative: Regimbeau
(86) International application number: PCT/JP2021/037966
(87) International publication number: WO 2022/097437

(57) **Abstract**

Provided is a pressure sensor capable of effectively dissipating heat produced by a conversion board to an external environment and of inhibiting heat migration from a fluid targeted for pressure detection to the conversion board. In a pressure sensor 100, heat dissipation unit for a conversion board 133 includes a connector housing 131 in which the conversion board 133 is in direct or indirect thermal contact with a board-facing surface 131a1 located at a second end of the board housing portion 131a and a connection terminal 134 whose first-end side is connected to the conversion board 133 and whose second-end side extends into a connector connection portion 131b through a partition wall portion 131c, and heat migration inhibition unit for the conversion board 133 includes an internal space S interposed between the conversion board 133 and a pressure detection unit 120.

## Description

### Technical Field

The present invention relates to a pressure sensor having a conversion board provided thereinside.

### Background Art

In recent years, there have been demands for low power consumption and high versatility in, e.g., a control IC used in a fluid apparatus (for example, an air-conditioning system such as an air conditioner), and various drive voltages and signaling modes have widely been used. A pressure sensor used in this fluid apparatus is no exception and needs to be adapted to various drive voltages (such as, for example, 3.3 V, 5 V, or 12 V to 24 V) and various signaling modes for pressure detection signals (such as, for example, a current output mode such as a two-wire/three-wire method, a voltage output mode varying from, e.g., 1 V to 5 V, a digital output mode, or a wireless output mode).

In this regard, for example, PTL 1 describes a pressure sensor such that in order for the pressure sensor to be adapted to various driving voltages and signaling modes for pressure detection signals, a conversion board including a conversion circuit that converts both of a drive voltage and a pressure detection signal is externally connected between a control circuit and the pressure sensor.

### Citation List

### Patent Literature

PTL 1: Japanese Patent Laid-Open No. 2018-040758

### Summary of Invention

### Technical Problem

However, since PTL 1 required an external connection between the pressure sensor and the conversion board via a cable, it was long and difficult to be compact in size and being prone to connection failure due to external impact, vibration, or the like.

To solve these problems, it is conceivable to omit the cable and dispose the conversion board inside the pressure sensor. The conversion board produces heat from itself upon, e.g., transformation of drive voltage. Thus, disposing the conversion board inside the pressure sensor creates a concern that heat produced by the conversion board cannot be efficiently dissipated to an external environment and causes electronic components of the conversion board to reach and exceed the temperatures that they can withstand and break. Further, heat migration of the temperature of a fluid targeted for pressure detection to the conversion board inside the pressure sensor too may cause the electronic components of the conversion board to reach and exceed the withstanding temperatures and break.

Improving the withstanding temperatures in electronic components of the conversion board is a possible way to prevent the breakage, but then the costs increase. Thus, a different solution has been called for.

The present invention has an object to provide a pressure sensor capable of effectively dissipating heat produced by a conversion board to an external environment and inhibiting heat migration from a fluid targeted for pressure detection to the conversion board.

### Solution to Problem

A pressure sensor to achieve the above object includes: a fluid introduction unit that introduces a fluid targeted for pressure detection into a pressure chamber; a pressure detection unit having a semiconductor sensor chip that detects pressure of the fluid introduced into the pressure chamber and a plurality of lead pins connected to the semiconductor sensor chip and forming external input and output terminals of the semiconductor sensor chip; and a signal delivery unit having a connector housing, a conversion board, and connection terminals, the connector housing having a board housing portion at a first-end side, a connector connection portion at a second-end side, and a partition wall portion between the board housing portion and the connector connection portion, the board housing portion defining an internal space, in which heat dissipation unit for the conversion board includes the connector housing in which the conversion board is in direct or indirect thermal contact with a board-facing surface located at a second end of the board housing portion and the connection terminals whose first-end side is connected to the conversion board and whose second-end side extends into the connector connection portion through the partition wall portion, and heat migration inhibition unit for the conversion board includes the internal space interposed between the conversion board and the pressure detection unit.

In the above pressure sensor, as the heat dissipation unit for the conversion board, the conversion board may be fixed to the board-facing surface.

In the above pressure sensor, the heat dissipation unit for the conversion board may further include a heat dissipation pattern circuit formed at least on the board-facing surface side of the conversion board.

In the above pressure sensor, the partition wall portion may have a through-hole that allows the board housing portion and the connector connection portion to communicate with each other, a heat producing component of the conversion board may be provided on the board-facing surface side, and the heat dissipation unit for the conversion board may further include the through-hole in which the heat producing component is disposed.

In the above pressure sensor, the through-hole may be closed by a waterproofing insulating agent, and the heat producing component may be covered by the waterproofing insulating agent.

In the above pressure sensor, the pressure sensor may further include a connection member that connects the fluid introduction unit, the pressure detection unit, and the signal delivery unit together, and the heat dissipation unit for the conversion board may further include the connection member disposed to overlap with the conversion board in a view seen in a direction perpendicular to a center axis.

In the above pressure sensor, a heat producing component of the conversion board may be provided on the board-facing surface side, and the heat dissipation unit for the conversion board may include a thermally conductive adhesive filling in at least a gap between the heat producing component and the connector housing.

In the above pressure sensor, the heat dissipation unit for the conversion board may further include a plurality of the heat producing components electrically connected in parallel.

In the above pressure sensor, the heat dissipation unit for the conversion board may further include a heat dissipation plate whose first-end side is disposed in contact with or adjacent to the heat producing component and whose second-end side extends into the connector connection portion through the partition wall portion.

In the above pressure sensor, the heat dissipation unit for the conversion board may further include the heat producing component of a lead type and a recess portion in the connector housing that houses the heat producing component of the lead type.

In the above pressure sensor, the signal delivery unit may further have a flexible wire-connection material, and the heat migration inhibition unit for the conversion board may include the flexible wire-connection material connected between the plurality of lead pins and the conversion board in a curved or bent state.

In the above pressure sensor, the heat migration inhibition unit for the conversion board may further include a non-metallic resin sheet and/or an adhesive that are thermally emissive and disposed between the pressure detection unit and the signal delivery unit. Advantageous Effects of Invention

The present invention can provide a pressure sensor capable of effectively dissipating heat produced by a conversion board to an external environment and inhibiting heat migration from a fluid targeted for pressure detection to the conversion board.

### Brief Description of Drawings

[Fig. 1] Fig. 1 is a sectional view showing a pressure sensor according to a first embodiment of the present invention.
[Fig. 2] Fig. 2 is a partly-enlarged sectional view showing a pressure sensor according to a second embodiment of the present invention.
[Fig. 3] Fig. 3 is a partly-enlarged sectional view showing a pressure sensor according to a third embodiment of the present invention.
[Fig. 4] Fig. 4 is a partly-enlarged sectional view showing a pressure sensor according to a fourth embodiment of the present invention.
[Fig. 5] Fig. 5 is a sectional view showing a pressure sensor according to a fifth embodiment of the present invention.
[Fig. 6] Fig. 6 is a partly-enlarged sectional view showing a pressure sensor according to a sixth embodiment of the present invention.
[Fig. 7] Fig. 7 is a partly-enlarged sectional view showing a pressure sensor according to a seventh embodiment of the present invention.
[Fig. 8A] Fig. 8A is a partial circuit diagram including a heat producing component of a conversion board in Fig. 7.
[Fig. 8B] Fig. 8B is a partial circuit diagram corresponding to Fig. 8A and including a heat producing component of a conversion board according to an eighth embodiment of the present invention.
[Fig. 9] Fig. 9 is a partly-enlarged sectional view showing a pressure sensor according to a ninth embodiment of the present invention.
[Fig. 10] Fig. 10 is a partly-enlarged sectional view showing a pressure sensor according to a tenth embodiment of the present invention.

### Description of Embodiments

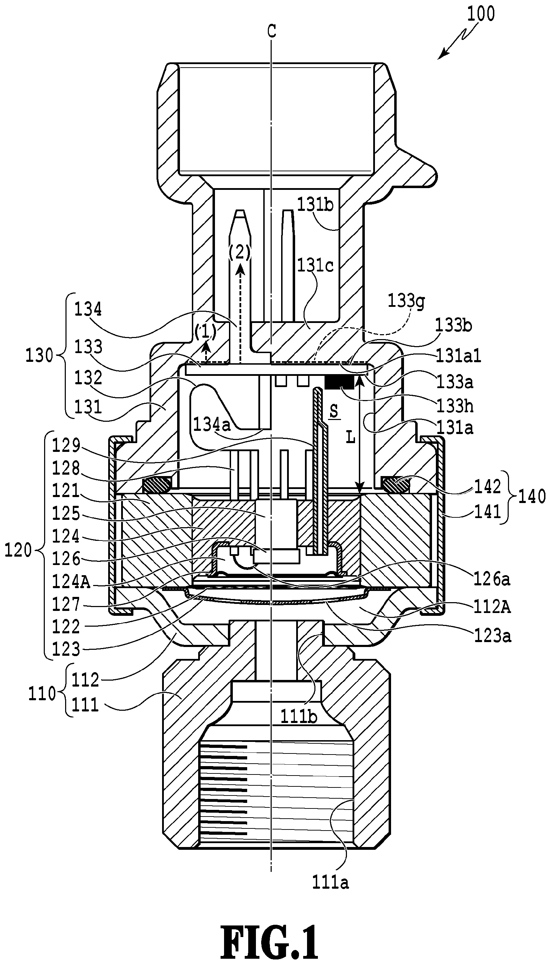

Embodiments of the present invention are described in detail with reference to Figs. 1 to 10. Note, however, that the present invention is not limited to the modes of the present embodiments.

Pressure sensors 100 to 1000 according to the embodiments of the present invention each include unit for dissipating heat from a conversion board 133 and unit for inhibiting heat migration to the conversion board 133 and thereby achieve the object to effectively dissipate heat produced by the conversion board 133 to an external environment and inhibit heat migration from a fluid targeted for pressure detection to the conversion board 133. The heat dissipation unit for the conversion board is roughly classified into a type where the upper surface of the conversion board 133 is in direct thermal contact with a connector housing 131 (first to sixth embodiments) and a type where the conversion board 133 (including a heat producing component) is in indirect thermal contact with the connector housing 131 (seventh to tenth embodiments). Thus, cases of employing the type where the conversion board 133 is in direct thermal contact with the connector housing 131 as the heat dissipation unit for the conversion board 133 are described first.

### <Terms>

In Description and Claims, a "first end" and a "second end" refer to a "lower end" and an "upper end" on the drawings, respectively.

### (First Embodiment)

### <Configuration of a Pressure Sensor>

A pressure sensor 100 according to a first embodiment of the present invention is described using Fig. 1.

The pressure sensor 100 is formed by a fluid introduction unit 110, a pressure detection unit 120, a signal delivery unit 130, and a connection member 140. The configurations of the pressure sensor 100 are sequentially described below. Note that the pressure sensor 100 is such that after the fluid introduction unit 110 and the pressure detection unit 120 are joined and fixed together and the pressure detection unit 120 and the signal delivery unit 130 are electrically coupled, the fluid introduction unit 110, the pressure detection unit 120, and the signal delivery unit 130 are assembled together by the connection member 140 to form an integral body.

### <Fluid Introduction Unit>

The fluid introduction unit 110 is for introducing a fluid targeted for pressure detection into a pressure chamber 112A to be described later, and includes a metallic coupling member 111 and a metallic base plate 112 connected to a second end of the coupling member 111 by welding or the like.

The coupling member 111 includes an female thread portion 111a connected to piping (not shown) for introducing a fluid targeted for pressure detection and a port 111b that guides the fluid introduced from the piping to the pressure chamber 112A. An opening end of the port 11 1b is connected to an opening portion provided in the center of the base plate 112 by welding or the like. Although the coupling member 111 includes the female thread portion 111a in the present embodiment, the present invention is not limited to this. For example, the coupling member 111 may include an male thread portion, or a connection pipe made of copper may be connected in place of the coupling member 111.

The base plate 112 has a bowl shape that widens in diameter radially with respect to a center axis C of the pressure sensor 100 from a first end to a second end and forms the pressure chamber 112A between the base plate 112 and a diaphragm 122 to be described later.

### <Pressure Detection Unit>

The pressure detection unit 120 detects the pressure of a fluid in the pressure chamber 112A, and includes a housing 121 having a through-hole, the diaphragm 122 that separates the pressure chamber 112A described above and a liquid seal chamber 124A to be described later, and a protection cover 123 disposed at the pressure chamber 112A side of the diaphragm 122. The pressure detection unit 120 also includes a hermetic glass 124 sealed in the through-hole of the housing 121, the liquid seal chamber 124A in which seal oil fills in between a concave portion of the hermetic glass 124 at the pressure chamber 112A side and the diaphragm 122, and a support 125 disposed in the center of the hermetic glass 124. The pressure detection unit 120 further includes a semiconductor sensor chip 126 supported by the support 125 and disposed inside the liquid seal chamber 124A, a potential adjustment member 127 disposed around the liquid seal chamber 124A, a plurality of lead pins 128 fixed to the hermetic glass 124, and an oil-filling pipe 129 fixed to the hermetic glass 124.

The housing 121 is formed of a metal material such as, for example, Fe-Ni-based alloy or stainless steel to ensure the strength around the hermetic glass 124. The diaphragm 122 and the protection cover 123 are both formed of a metal material and are both welded at the outer circumferential edge portion of the through-hole of the housing 121 at the pressure chamber 112A side. The protection cover 123 is provided inside the pressure chamber 112A to protect the diaphragm 122 and is provided with a plurality of communication holes 123a for the fluid introduced from the fluid introduction unit 110 to pass through. After assembly of the pressure detection unit 120, the housing 121 is welded from outside at the outer circumferential edge portion of the base plate 112 of the fluid introduction unit 110 by TIG welding, plasma welding, laser welding, or the like.

The hermetic glass 124 is provided to protect the liquid seal chamber 124A in which the semiconductor sensor chip 126 is liquid-sealed from the surrounding environmental conditions such as humidity, dust and heat in the air, hold the plurality of lead pins 128, and insulate the plurality of lead pins 128 and the housing 121 from each other. The semiconductor sensor chip 126 is supported by an adhesive or the like on the liquid seal chamber 124A side of the support 125 disposed in the center of the hermetic glass 124. Although the support 125 is formed by a Fe-Ni-based alloy in the present embodiment, it is to be noted that the present invention is not limited to this. For example, the support 125 may be formed by other metal material such as stainless steel, or the support 125 may be omitted to employ a configuration in which the semiconductor sensor chip 126 is supported directly on a flat surface forming the concave portion of the hermetic glass 124.

Included inside the semiconductor sensor chip 126 are a diaphragm made of a piezoresistive material (such as, for example, monocrystalline silicon), a bridge circuit that bridges and connects a plurality of semiconductor strain gauges formed on the diaphragm, an amplification circuit that processes an output from the bridge circuit, and an integrated circuit such as an arithmetic processing circuit. Also, the semiconductor sensor chip 126 is connected to the plurality of lead pins 128 by bonding wires 126a made of, for example, gold or aluminum, and the plurality of lead pins 128 form external input and output terminals of the semiconductor sensor chip 126.

The potential adjustment member 127 is provided so as to place the semiconductor sensor chip 126 in no electric field (zero potential) so that, e.g., circuits in the chip may not be adversely affected by the potential produced between a frame ground and a secondary power source. The potential adjustment member 127 is disposed between the semiconductor sensor chip 126 and the diaphragm 122 in the liquid seal chamber 124A, formed of an electrically conductive material such as metal, and is connected to a terminal of the semiconductor sensor chip 126 connected to zero potential.

The plurality of lead pins 128 and the oil-filling pipe 129 are fixed to the hermetic glass 124 by a hermetic process while being penetrated therethrough. In the present embodiment, a total of eight lead pins 128 are provided as the lead pins 128. Specifically, three lead pins 128 are provided for external output (Vout), drive voltage supply (Vcc), and grounding (GND), and five lead pins 128 are provided as adjustment terminals for the semiconductor sensor chip 126. Note that Fig. 1 shows four of the eight lead pins 128.

The oil-filling pipe 129 is provided to fill the inside of the liquid seal chamber 124A with seal oil (such as, for example, silicone oil or fluorine inert liquid). Note that a second end of the oil-filling pipe 129 is crushed and closed as shown in Fig. 1 after the oil filling.

### <Operation of the Pressure Detection Unit>

The operation of the pressure detection unit 120 is described. First, the diaphragm 122 is pressed by a fluid introduced from the coupling member 111 to the pressure chamber 112A. The pressure of the pressure chamber 112A applied to the diaphragm 122 is transmitted to the semiconductor sensor chip 126 via the seal oil inside the liquid seal chamber 124A. This transmitted pressure deforms the silicon diaphragm of the semiconductor sensor chip 126, and the pressure is converted into an electric signal by the bridge circuit formed by a piezoresistive element and is outputted from the integrated circuit on the semiconductor sensor chip 126 to the signal delivery unit 130 via the bonding wires 126a and the plurality of lead pins 128.

### <Signal Delivery Unit>

The signal delivery unit 130 delivers the pressure signal detected by the pressure detection unit 120 to the outside, and includes the connector housing 131 for external connection disposed at the second end side of the pressure detection unit 120 and a flexible wire-connection material 132 whose first end is connected to the plurality of lead pins 128. The signal delivery unit 130 also includes the conversion board 133 fixed to the connector housing 131 and connection terminals 134 penetrating through and connected to the conversion board 133, with a first-end portion 134a of each of them being connected to a second end of the flexible wire-connection material 132.

The connector housing 131 is formed of an insulating resin or other material with relatively high thermal conductivity, and includes a board housing portion 131a having a concave shape at the first end side, a connector connection portion 131b having a concave shape at the second end side and connected to an external connector (not shown), and a partition wall portion 131c disposed between the board housing portion 131a and the connector connection portion 131b. In an internal space S defined by the board housing portion 13 1a, the plurality of lead pins 128 and the oil-filling pipe 129 extending from the hermetic glass 124, the flexible wire-connection material 132, the conversion board 133, and the like are disposed.

The conversion board 133 includes a conversion circuit (not shown) that converts both of a drive voltage and a pressure detection signal in order to support a drive voltage and a signaling mode for a pressure detection signal. The conversion circuit includes a voltage lowering circuit portion (not shown) that lowers a drive voltage of a control circuit (not shown) connected to an outside of the pressure sensor 100 via the connection terminals 134 (for example, 8 V to 36 V) to a drive voltage of the semiconductor sensor chip 126 (for example, 5.0 V) and a voltage shifting circuit portion (not shown) that raises a pressure detection signal of the pressure sensor 100 (for example, 0.5 V to 4.5 V) to a pressure detection signal of the control circuit (for example, 1 V to 5 V). Thus appropriately selecting the conversion board 133 to be provided in the pressure sensor 100 to support the drive voltage and the signaling mode for a pressure detection signal enables the differences of the drive voltage and the pressure detection signal to be absorbed without having to change the design of the pressure sensor 100.

At least three connection terminals 134 are provided: one for external output (Vout), one for drive voltage supply (Vcc), and one for grounding (GND). The connection terminals 134 are connected to the conversion board 133 by having the first-end portions 134a of the connection terminals 134 inserted through through-holes provided in the conversion board 133 and soldered at these penetrated portions for assemblage improvement. The first-end portions 134a of the connection terminals 134 are thus directly connected to the flexible wire-connection material 132. Meanwhile, the second-end sides of the connection terminals 134 penetrate through the partition wall portion 131c and extend into the connector connection portion 131b. The penetration portions in the partition wall portion 131c through which the connection terminals 134 penetrate are subjected to a liquid sealing treatment. Although a connection member for the connection terminals 134 and the conversion board 133 and a connection member for the conversion board 133 and the flexible wire-connection material 132 are a single member in the present embodiment, it is to be noted that the present invention is not limited to this. For example, a connection member for the connection terminals 134 and the conversion board 133 and a connection member for the conversion board 133 and the flexible wire-connection material 132 may be separate members. Also, although the plurality of lead pins 128 and the first-end portions 134a of the connection terminals 134 are connected to each other via the flexible wire-connection material 132 in the present embodiment, this is not an essential configuration. For example, the flexible wire-connection material 132 may be omitted, and the plurality of lead pins 128 may be connected directly to the first-end portions 134a of the connection terminals 134 or to the conversion board 133.

### <Connection Member>

The connection member 140 includes a swaging plate 141 that connects and fixes the fluid introduction unit 110, the pressure detection unit 120, and the signal delivery unit 130 by swaging and an O-ring 142 disposed between the pressure detection unit 120 and the signal delivery unit 130.

The swaging plate 141 is formed by metal, such as copper, into a hollow cylindrical shape. The swaging plate 141 is disposed around the fluid introduction unit 110, the pressure detection unit 120, and the signal delivery unit 130, and is fixed to the fluid introduction unit 110 and the signal delivery unit 130 by swaging. This swaging causes the O-ring 142 to be sandwiched between the pressure detection unit 120 and the signal delivery unit 130 to serve a waterproofing/dustproofing function.

### <Heat Dissipation Unit for the Conversion Board>

The conversion board 133 includes a first-end surface 133a where various electronic components are mounted and a second-end surface 133b bonded and fixed to a board-facing surface 131a1. A heat producing component 133h (such as, for example, a transistor or a regulator) in the present embodiment (the first embodiment) is a surface-mount type and is mounted on the first-end surface 133a. This conversion board 133 produces heat from itself upon transformation of drive voltage or the like. Thus, unless no measures are taken against this, the electronic components on the conversion board may reach and exceed their withstanding temperatures and break. Thus, the present embodiment employs various heat dissipation unit for the conversion board 133 so that the electronic components on the conversion board 133 may not reach and exceed their withstanding temperatures. Heat produced by the conversion board 133 can thereby be efficiently dissipated to an external environment, which consequently can improve a margin for the withstanding temperature for the conversion board 133. The following describes the heat dissipation unit for the conversion board 133 in the present embodiment more specifically.

### <First Heat Dissipation Unit for the Conversion Board (the Connector Housing)>

As first heat dissipation unit for the conversion board 133, the connector housing 131 is used, forming a heat dissipation path indicated by (1) with a broken line in Fig. 1. Specifically, the substantially flat board-facing surface 131a1 is formed at the second end of the board housing portion 131a, and the second-end surface 133b of the conversion board 133 is bonded and fixed to the board-facing surface 131a1 with a thermally conductive adhesive 133g, with the bonded area being relatively large. The thermally conductive adhesive 133g in the present embodiment has a larger thermal conductivity than that of air, which is 0.0241 (W/m·K), so as that the heat may migrate to the connector housing 131 smoothly, and preferably has a thermal conductivity of 0.5 (W/m K) or above. For example, a silicone adhesive TSE3331 with a thermal conductivity of 0.63 (W/m K) manufactured by Momentive, a silicone adhesive KE-4918-WF with a thermal conductivity of 0.85 (W/m·K) manufactured by Shin-Etsu Chemical Co., Ltd., an epoxy adhesive EW2070 with a thermal conductivity of 1.6 (W/m·K) manufactured by 3M, or a silicon adhesive tape SR-BOND-1-200 with a thermal conductivity of 1.2 (W/m·K) manufactured by Shin-Etsu Chemical Co., Ltd. is used. Thus, the present embodiment can efficiently dissipate heat produced by the conversion board 133 to an external environment via the adhesive 133g having a relatively high thermal conductivity and the connector housing 131 with a relatively large bonded area. Although the conversion board 133 is fixed to the board-facing surface 131a1 with the thermally conductive adhesive 133g in the present embodiment, it is to be noted that the present invention is not limited to this. For example, the conversion board 133 may be fixed to the board-facing surface 131a1 by swaging or press fitting.

### <Second Heat Dissipation Unit for the Conversion Board (the Connection Terminals)>

As second heat dissipation unit for the conversion board 133, at least three connection terminals 134, one for external output (Vout), one for drive voltage supply (Vcc), and one for grounding (GND), are used, forming a heat dissipation path indicated by (2) with a broken line in Fig. 1. The connection terminals 134 form favorable heat dissipation paths because they are directly electrically connected to the heat producing component 133h of the conversion board 133 and have a very high thermal conductivity compared to the connector housing 131 made of resin. Thus, in the present embodiment, heat produced by the conversion board 133 can be efficiently dissipated to an external environment via the connection terminals 134 having a very high thermal conductivity.

### <Heat Migration Inhibition Unit>

A fluid targeted for pressure detection is introduced into the pressure chamber 112A, and depending on conditions under which the fluid is used, an extremely hot fluid (e.g., approximately 130 (°C)) may be introduced and becomes a source of heat. In this instance, heat on the semiconductor sensor chip 126 side (such as heat of a hot fluid introduced into the pressure chamber 112A) may migrate to the conversion board 133 (heat transfer, heat conduction, or heat emission (radiation) from the first-end side to the second-end side in Fig. 1) and cancel out the heat dissipation effect provided using the first heat dissipation unit (the connector housing) and the second heat dissipation unit (the connection terminals). For this reason, the present embodiment employs various heat migration inhibition unit so that the heat on the semiconductor sensor chip 126 side (such as the heat of a hot fluid introduced into the pressure chamber 112A) may not migrate to the conversion board 133. Thus, the present embodiment can inhibit the heat on the semiconductor sensor chip 126 side from migrating to the conversion board 133, thereby allowing the heat dissipation effect provided using the first heat dissipation unit (the connector housing) and the second heat dissipation unit (the connection terminals) to be provided. The following describes the heat migration inhibition unit for the conversion board 133 in the present embodiment more specifically.

### <First Heat Migration Inhibition Unit for the Conversion Board (the Internal Space)>

As first heat migration inhibition unit for the conversion board 133, the internal space S is used. Specifically, because the conversion board 133 is provided at the second end of the board housing portion 131a, a distance L in the center axis C direction in the internal space S between the conversion board 133 and the housing 121 at the semiconductor sensor chip 126 side can be set to be as large as possible. Thus, the present embodiment can inhibit heat on the semiconductor sensor chip 126 side from being transferred to the conversion board 133 because the heat passes through the internal space S having a long heat transfer path and having air with a low thermal conductivity.

### <Second Heat Migration Inhibition Unit for the Conversion Board (the Flexible Connecting Material)>

As second heat migration inhibition unit for the conversion board 133, the flexible wire-connection material 132 is used. Specifically, the flexible wire-connection material 132 is formed of, for example, a flexible printed board (FPC) having flexibility, a thin plate-shaped electrically conductive member, a single lead wire, a collection of lead wires, or the like and connects the plurality of lead pins 128 to the first-end portions 134a of the connection terminals 134 (the conversion board 133) in the internal space S in a state of being curved or bent. Thus, the connection distance between the plurality of lead pins 128 and the first-end portions 134a of the connection terminals 134 (the conversion board 133) can be set to be relatively long. Thus, in the present embodiment, heat on the semiconductor sensor chip 126 side passes through the flexible wire-connection material 132 having a long heat transfer path and is thereby inhibited from being transferred to the conversion board 133. Should the heat on the semiconductor sensor chip 126 side be transferred to the conversion board 133 side through the flexible wire-connection material 132, because the second-end side of the flexible wire-connection material 132 is directly connected to the first-end portions 134a of the connection terminals 134, the second heat dissipation unit (the connection terminals) efficiently dissipates the heat to an external environment.

### <Steps of Assembling the Pressure Sensor>

Steps of assembling the pressure sensor 100 are described. First, the pressure detection unit 120 and the signal delivery unit 130 are each assembled. Then, in the pressure detection unit 120, seal oil is introduced to fill in the liquid seal chamber 124A through the oil-filling pipe 129, and the oil-filling pipe 129 is closed. Further, the fluid introduction unit 110 is fixed to this pressure detection unit 120 by welding or the like. After that, the plurality of lead pins 128 of the pressure detection unit 120 and the conversion board 133 of the signal delivery unit 130 are disposed side by side so that they both face upward, and the flexible wire-connection material 132 is, at the first side, welded and fixed to the plurality of lead pins 128 and, at the second side, welded and fixed to the first-end portions 134a of the connection terminals 134 by laser welding or the like. Further, the pressure detection unit 120 and the signal delivery unit 130 are disposed to face each other coaxially with the curved or bent flexible wire-connection material 132 interposed therebetween so that the O-ring 142 is sandwiched between the pressure detection unit 120 and the signal delivery unit 130. Lastly, the first-end side and the second-end side of the swaging plate 141 are brought into engagement with the base plate 112 of the fluid introduction unit 110 and the connector housing 131 of the signal delivery unit 130, respectively, so that the fluid introduction unit 110, the pressure detection unit 120, and the signal delivery unit 130 are fixed to form an integral body.

In a case where the curved or bent flexible wire-connection material 132 is not employed in the pressure sensor 100, the steps of assembling the pressure sensor 100 need to be carried out, for example, in a stacking manner from the first-end side to the second-end side in the center axis C direction. The assembly steps therefore have a very low degree of freedom, and it is difficult to shorten the assembly time. By contrast, in the present embodiment in which the pressure detection unit 120 and the signal delivery unit 130 are connected via the curved or bent flexible wire-connection material 132, it is possible to increase the degree of freedom for the steps of assembling the pressure sensor 100 and therefore shorten the assembly time. Although the timing of introducing the seal oil to fill in the liquid seal chamber 124A is before the fluid introduction unit 110 is fixed to the pressure detection unit 120 in the present embodiment, it is to be noted that the present invention is not limited to this. For example, the timing may be any timing before the fixation by the swaging plate 141.

### (Second Embodiment)

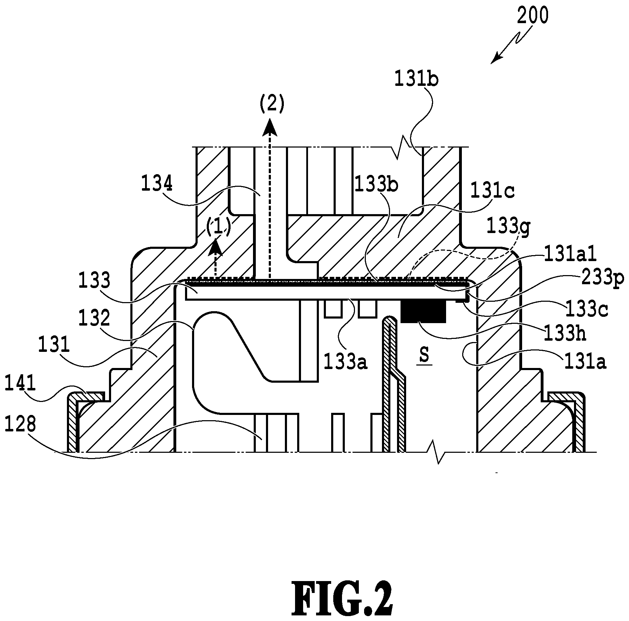

A pressure sensor 200 according to a second embodiment of the present invention is described using Fig. 2. The pressure sensor 200 according to the second embodiment differs from the pressure sensor 100 of the first embodiment mainly in having a heat dissipation pattern circuit 233p provided at the conversion board 133. The other basic configurations are the same as those of the first embodiment. The same members are denoted by the same reference numeral to omit repetitive descriptions.

<First Heat Dissipation Unit for the Conversion Board (the Connector Housing)>

As the first heat dissipation unit for the conversion board 133, the heat dissipation pattern circuit 233p is additionally used, forming a heat dissipation path indicated by (1) with a broken line in Fig. 2. Specifically, at the conversion board 133, the heat dissipation pattern circuit 233p made of metal having a relatively high thermal conductivity, such as copper foil, is formed at the first-end surface 133a, a side surface 133c, and the second-end surface 133b. Thus, the second embodiment causes heat produced by the conversion board 133 to migrate to the heat dissipation pattern circuit 233p with a relatively high thermal conductivity more actively than the first embodiment, and the heat can therefore be dissipated efficiently to an external environment via the adhesive 133g and the connector housing 131 that have high thermal conductivity.

Because the heat dissipation pattern circuit 233p is formed to surround at least part of the heat producing component 133h, the present embodiment can cause heat produced by the heat producing component 133h to migrate to the heat dissipation pattern circuit 233p more actively. Also, in the present embodiment, the heat dissipation pattern circuit 233p causes the heat produced by the heat producing component 133h to migrate from the first-end surface 133a to the second-end surface 133b via the side surface 133c of the conversion board 133. However, the present invention is not limited to this. For example, in place of the side surface 133c of the conversion board 133, a pin which is inserted through the conversion board 133 and provided upright and which connects the first-end surface 133a and the second-end surface 133b may be employed. Further, although the heat dissipation pattern circuit 233p is formed at the first-end surface 133a, the side surface 133c, and the second-end surface 133b in the present embodiment, the present invention is not limited to this. For example, the heat dissipation pattern circuit 233p may be formed at least at the second-end surface 133b.

### <Second Heat Dissipation Unit for the Conversion Board (the Connection Terminals)>

As the second heat dissipation unit for the conversion board 133, the heat dissipation pattern circuit 233p is additionally used, forming a heat dissipation path indicated by (2) with a broken line in Fig. 2. Specifically, the heat dissipation pattern circuit 233p provided at the conversion board 133 is connected to the connection terminal 134 for grounding (GND). Thus, the second embodiment causes heat produced by the conversion board 133 to migrate to the heat dissipation pattern circuit 233p with a relatively high thermal conductivity more actively than the first embodiment, and the heat can therefore be dissipated more efficiently to an external environment via the connection terminal 134 for grounding (GND).

Although the heat dissipation pattern circuit 233p is provided at the conversion board 133 as the first heat dissipation unit (the connector housing) and the second heat dissipation unit (the connection terminals) in the present embodiment, it is to be noted that the present invention is not limited to this. For example, in place of the heat dissipation pattern circuit 233p, a heat dissipation plate formed of a copper plate, an aluminum plate, or the like may be employed. Also, although the heat dissipation pattern circuit 233p in the present embodiment is connected to the connection terminal 134 for grounding (GND), the present invention is not limited to this. Any mode may be employed as long as heat is caused to migrate from the heat dissipation pattern circuit 233p to the connection terminal 134 for grounding (GND). For example, the heat dissipation pattern circuit 233p may be disposed at a position close to the connection terminal 134 for grounding (GND) in a non-connected state. Further, although heat is dissipated to an external environment via the connection terminal 134 for grounding (GND) in the present embodiment, the present invention is not limited to this. For example, the heat may be dissipated to an external environment via the connection terminals 134 for external output (Vout) and for drive voltage supply (Vcc).

### (Third Embodiment)

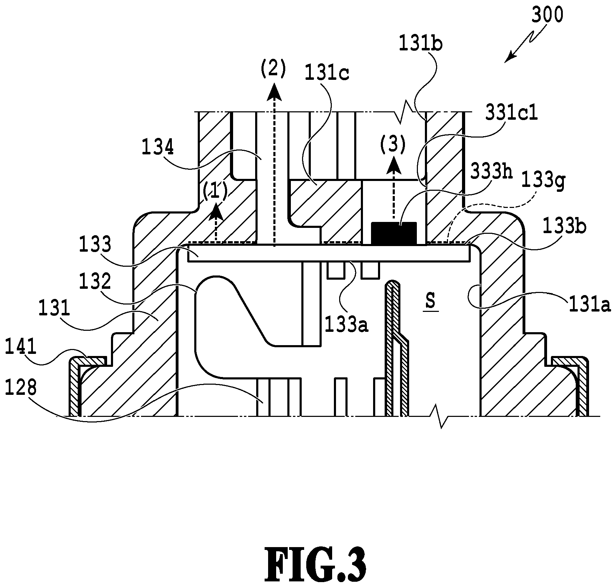

A pressure sensor 300 according to a third embodiment of the present invention is described using Fig. 3. The pressure sensor 300 according to the third embodiment differs from the pressure sensor 100 of the first embodiment mainly in having a through-hole 331c1 formed in the partition wall portion 131c of the connector housing 131 and having a heat producing component 333h of the conversion board 133 disposed inside this through-hole 331c1. The other basic configurations are the same as those of the first embodiment. The same members are denoted by the same reference numeral to omit repetitive descriptions.

### <Third Heat Dissipation Unit for the Conversion Board (the Through-Hole)>

As third heat dissipation unit for the conversion board 133, the through-hole 331c1 is additionally used, forming a heat dissipation path indicated by (3) with a broken line in Fig. 3. Specifically, the partition wall portion 131c of the connector housing 131 is provided with the through-hole 331c1 extending in the center axis direction C and allowing the board housing portion 131a and the connector connection portion 131b to communicate with each other. Also, the heat producing component 333h of the conversion board 133 is a surface-mount type and is disposed at the second-end surface 133b side and inside the through-hole 331c1. Thus, in addition to effects similar to those provided by the first embodiment (effects offered by the first heat dissipation unit (the connector housing) and the second heat dissipation unit (the connection terminals)), the third embodiment can efficiently dissipate heat produced by the dissipate heat producing component 333h to an external environment via the through-hole 331c1.

Note that the pressure sensor 300 of the present embodiment has the internal space S always communicating with an external environment via the through-hole 331c1 and is therefore to be used under an environment not affected by liquid, dust, or the like.

### (Fourth Embodiment)

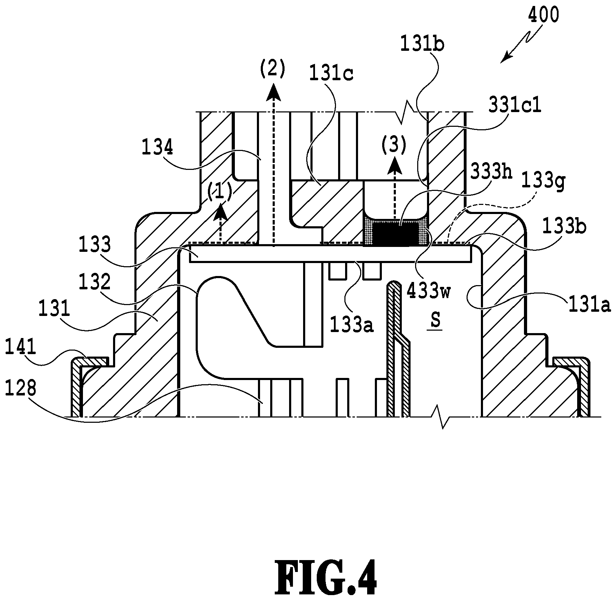

A pressure sensor 400 according to a fourth embodiment of the present invention is described using Fig. 4. The pressure sensor 400 according to the fourth embodiment differs from the pressure sensor 300 of the third embodiment mainly in that the through-hole 331c1 is closed with a waterproofing insulating agent 433w. The other basic configurations are the same as those of the third embodiment. The same members are denoted by the same reference numeral to omit repetitive descriptions.

### <Third Heat Dissipation Unit for the Conversion Board (the Through-Hole)>

As the third heat dissipation unit for the conversion board 133, the waterproofing insulating agent 433w is additionally used, forming a heat dissipation path indicated by (3) with a broken line in Fig. 4. Specifically, the pressure sensor 300 in the third embodiment is assumed to be used in an environment not affected by liquid, dust, or the like and is therefore limited in its use. Thus, the usage of the pressure sensor 300 can be broadened by closing the through-hole 331c1 with the waterproofing insulating agent 433w and covering the heat producing component 333h with the waterproofing insulating agent 433w so as to improve the waterproofing and dustproofing effect. Thus, in addition to effects similar to those provided by the third embodiment (the effects offered by the first heat dissipation unit (the connector housing), the second heat dissipation unit (the connection terminals), and the third heat dissipation unit (the through-hole)), the fourth embodiment can improve the waterproofing and dustproofing effect for the pressure sensor 400.

Note that the waterproofing insulating agent 433w in the present embodiment is one having a relatively high thermal conductivity, but in order for the costs not to go up, for example, one that is used as the thermally conductive adhesive 133g may also be used as the waterproofing insulating agent 433w.

### (Fifth Embodiment)

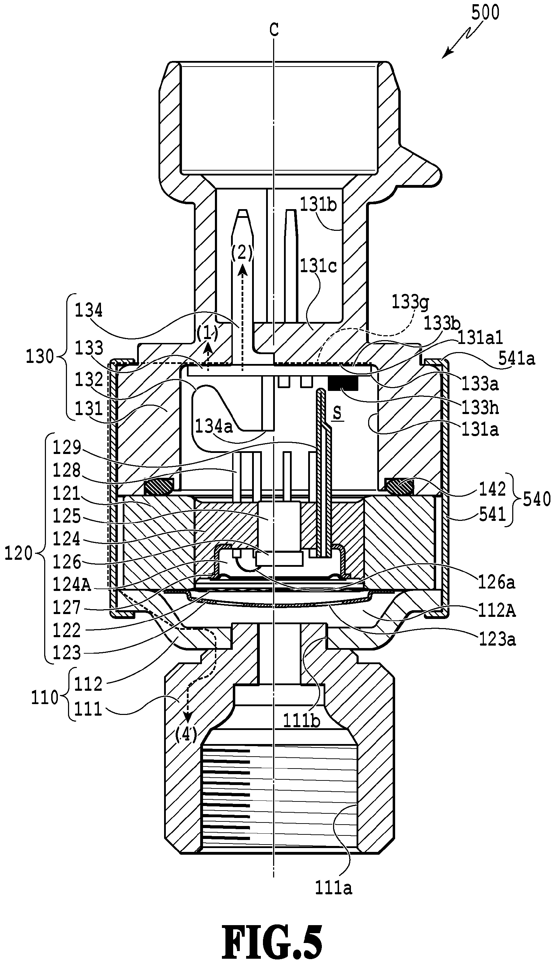

A pressure sensor 500 according to a fifth embodiment of the present invention is described using Fig. 5. The pressure sensor 500 according to the fifth embodiment differs from the pressure sensor 100 of the first embodiment mainly in that a second-end portion 541a of a swaging plate 541 is disposed to overlap with the conversion board 133 in a view seen in a direction perpendicular to the center axis C. The other basic configurations are the same as those of the first embodiment. The same members are denoted by the same reference numeral to omit repetitive descriptions.

### <Fourth Heat Dissipation Unit for the Conversion Board (the Swaging Plate)>

As fourth heat dissipation unit for the conversion board 133, the swaging plate 541 is additionally used, forming a heat dissipation path indicated by (4) with a broken line in Fig. 5. Specifically, the second-end portion 541a of the swaging plate 541 made of metal such as copper is disposed to overlap with the conversion board 133 in a view seen in a direction perpendicular to the center axis C. The swaging plate 541, the base plate 112, and the coupling member 111 forming the new heat dissipation path are all made of metal and therefore have relatively high thermal conductivity. Thus, in addition to effects similar to those provided by the first embodiment (the effects offered by the first heat dissipation unit (the connector housing) and the second heat dissipation unit (the connection terminals)), the fifth embodiment can dissipate heat produced by the conversion board 133 to an external environment from the swaging plate 541 with a relatively high thermal conductivity via the adhesive 133g and the connector housing 131 that are thermally conductive, and can also dissipate the heat to an external environment via the base plate 112 and the coupling member 111 more efficiently.

### (Sixth Embodiment)

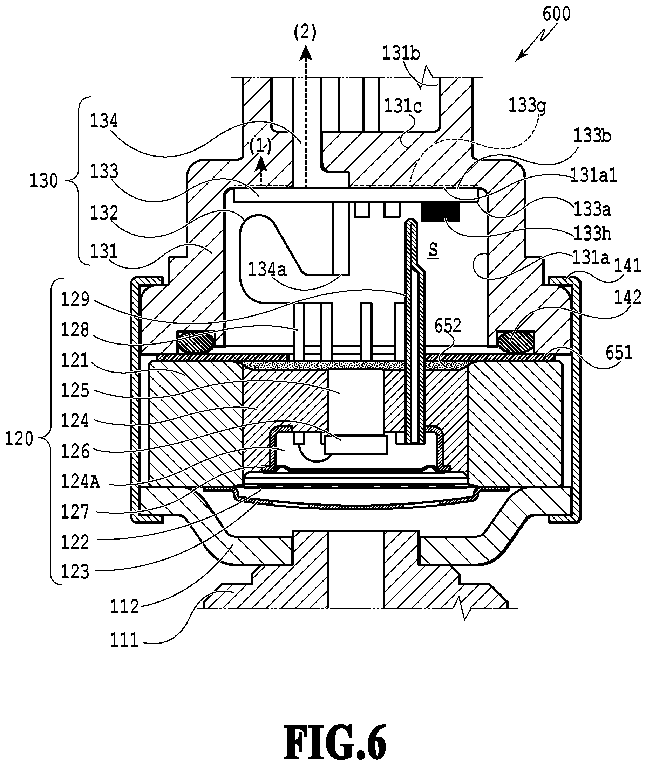

A pressure sensor 600 according to a sixth embodiment of the present invention is described using Fig. 6. The pressure sensor 600 according to the sixth embodiment differs from the pressure sensor 100 of the first embodiment mainly in that a non-metallic resin sheet 651 and/or an adhesive 652 that are thermally emissive is interposed between the pressure detection unit 120 and the signal delivery unit 130. The other basic configurations are the same as those of the first embodiment. The same members are denoted by the same reference numeral to omit repetitive descriptions.

### <Third Heat Migration Inhibition Unit for the Conversion Board (the Resin Sheet)>

As third heat migration inhibition unit for the conversion board 133, the non-metallic resin sheet 651 and the adhesive 652 that are thermally emissive are used. Specifically, the non-metallic resin sheet 651 and the adhesive 652 that are thermally emissive are interposed between the pressure detection unit 120 and the signal delivery unit 130. The resin sheet 651 is donut-shaped and disposed around the plurality of lead pins 128 and covering the upper surface of the housing 121. Also, the adhesive 652 is applied to the upper surface of the hermetic glass 124. Thus, in addition to effects similar to those provided by the first embodiment (the effects offered by the first heat migration inhibition unit (the internal space) and the second heat migration inhibition unit (the flexible wire-connection material)), the sixth embodiment can inhibit electromagnetic waves, including infrared rays and visible light, generated by the heat on the semiconductor sensor chip 126 side from being thermally emitted (radiated) to the conversion board 133 because the non-metallic resin sheet 651 and the adhesive 652 that are thermally emissive are interposed. Also, because the non-metallic resin sheet 651 and the adhesive 652 that have high thermal emissivity cover the second end of the housing 121 that has low thermal emissivity, the heat of the housing 121 is dissipated by thermal emission (radiation) via the non-metallic resin sheet 651 and the adhesive 652 that have high thermal emissivity, which helps prevent an increase in the temperature of the housing 121. For the thermally-emissive, non-metallic resin sheet 651 in the present embodiment, one with a thermal emissivity of 0.85 or above can be appropriately used. Also, for the thermally-emissive adhesive 652 in the present embodiment, the same material as that for the thermally-conductive adhesive 133g described above can be used.

Although the resin sheet 651 in the present embodiment has a donut shape, it is to be noted that the present invention is not limited to this. For example, any shape may be employed as long as the resin sheet 651 in that shape can be interposed between the pressure detection unit 120 and the signal delivery unit 130. Also, although both of the resin sheet 651 and the adhesive 652 are used in the present embodiment, the present invention is not limited to this. For example, only the resin sheet 651 or the adhesive 652 may be used.

Next, cases of employing a type where the conversion board 133 (including a heat producing component) is in indirect thermal contact with the connector housing 131 as heat dissipation unit for the conversion board 133 are described.

### (Seventh Embodiment)

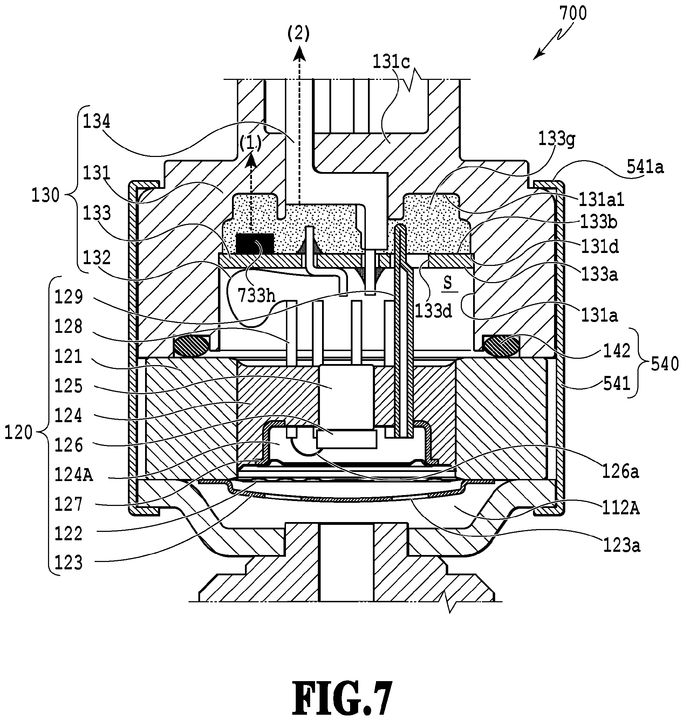

A pressure sensor 700 according to a seventh embodiment of the present invention is described using Fig. 7. The pressure sensor 700 according to the seventh embodiment differs from the pressure sensor 100 of the first embodiment mainly in that a heat producing component 733h of the conversion board 133 is provided at the board-facing surface 131a1 side and that a gap between the conversion board 133 and the board-facing surface 131a1 is filled with the thermally conductive adhesive 133g. The other basic configurations are the same as those of the first embodiment. The same members are denoted by the same reference numeral to omit repetitive descriptions.

### <First Heat Dissipation Unit for the Conversion Board (the Connector Housing)>

As the first heat dissipation unit for the conversion board 133, the thermally conductive adhesive 133g with a relatively high thermal conductivity is additionally used, forming a heat dissipation path indicated by (1) with a broken line in Fig. 7. Specifically, the heat producing component 733h of a surface-mount type is provided at the board-facing surface 131a1 side, and with the signal delivery unit 130 being turned upside down, the conversion board 133 is fit into a step portion 131d of the connector housing 131, and a gap between this conversion board 133 and the board-facing surface 131a1 is filled with the thermally conductive adhesive 133g. An opening portion 133d is formed in this conversion board 133 to avoid interference with the oil-filling pipe 129, and through this opening portion 133d, filling of the thermally-conductive adhesive 133g and discharging of air bubbles mixed into the adhesive 133g can be performed. Note that, as shown in Fig. 7, the board-facing surface 131a1 does not necessarily have to be substantially flat in shape and may have, e.g., an uneven shape for molding.

In the seventh embodiment, the thermally conductive adhesive 133g surrounds not only the heat producing component 733h but also the first-end sides of the connection terminals 134. Thus, heat produced by the heat producing component 733h can be caused to migrate actively to the thermally conductive adhesive 133g surrounding the heat producing component 133h, and consequently, heat migration to an external environment can be achieved via the first heat dissipation unit (the connector housing) and the second heat dissipation unit (the connection terminals) more efficiently than in the first embodiment.

### (Eighth Embodiment)

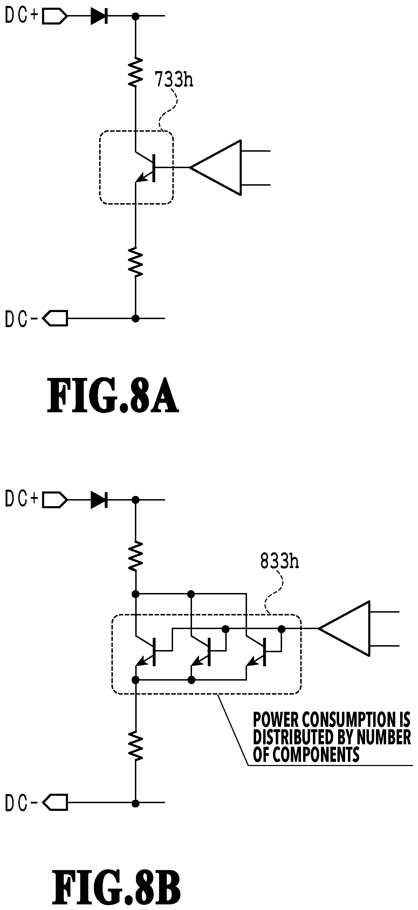

A partial circuit diagram including a heat producing component 833h of the conversion board 133 according to an eighth embodiment of the present invention is described using Fig. 8B. Note that Fig. 8A shows a partial circuit diagram including the heat producing component 733h in the seventh embodiment for a comparison with Fig. 8B. The heat producing component 833h according to the eighth embodiment differs from the heat producing component 733h of the seventh embodiment mainly in that a plurality of them are electrically connected in parallel. The other basic configurations are the same as those of the seventh embodiment. The same members are denoted by the same reference numeral to omit repetitive descriptions.

### <Fifth Heat Dissipation Unit for the Conversion Board (Plurality of Heat Producing Components Connected in Parallel)>

As fifth heat dissipation unit for the conversion board 133, the plurality of heat producing components 833h electrically connected in parallel are used. Specifically, a plurality of heat producing components 833h (e.g., transistors) are electrically connected in parallel, and power consumption can be distributed by the number of heat producing components 833h, which helps prevent an electronic component of the conversion board 133 from reaching and exceeding its withstanding temperature.

In the eighth embodiment, a plurality of heat producing components 833h are electrically connected in parallel. Thus, the surface area can be increased actively by the number of heat producing components 833h, and heat produced by the heat producing components 833h is actively caused to migrate to the thermally conductive adhesive 133g. Consequently, heat migration to an external environment can be achieved via the first heat dissipation unit (the connector housing) and the second heat dissipation unit (the connection terminals) more efficiently than in the seventh embodiment.

### (Ninth Embodiment)

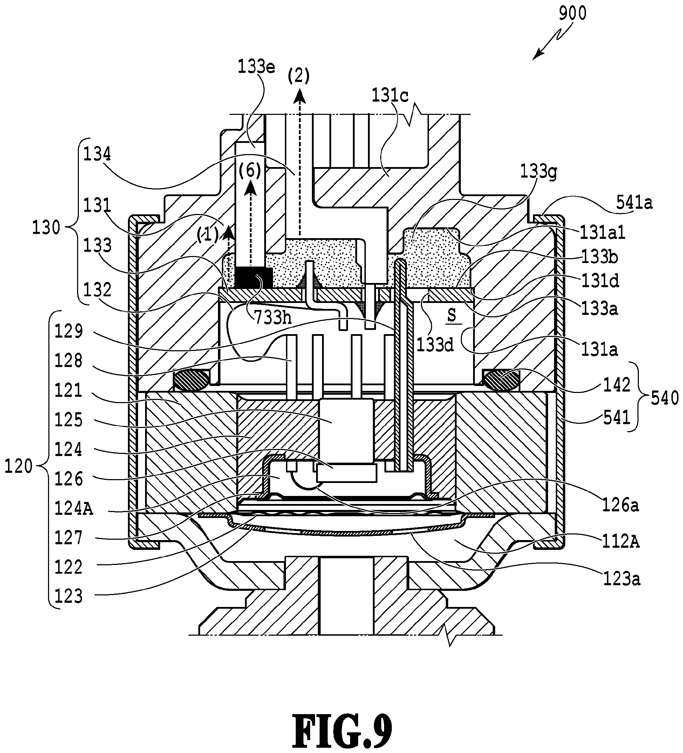

A pressure sensor 900 of a ninth embodiment of the present invention is described using Fig. 9. The pressure sensor 900 according to the ninth embodiment differs from the pressure sensor 700 of the seventh embodiment mainly in including a heat dissipation plate 133e disposed adjacent to the heat producing component 733h. The other basic configurations are the same as those of the seventh embodiment. The same members are denoted by the same reference numeral to omit repetitive descriptions.

### <Sixth Heat Dissipation Unit for the Conversion Board (Heat Dissipation Plate)>

As sixth heat dissipation unit for the conversion board 133, the heat dissipation plate 133e is additionally used, forming a heat dissipation path indicated by (6) with a broken line in Fig. 9. Specifically, the first-end side of the heat dissipation plate 133e made of metal with a high thermal conductivity, such as copper, is disposed adjacent to the heat producing component 733h, and the second-end side of the heat dissipation plate 133e extends into the connector connection portion 131b through the partition wall portion 131c. Thus, in addition to effects similar to those provided by the seventh embodiment (the effects offered by the first heat dissipation unit (the connector housing) and the second heat dissipation unit (the connection terminals)), the ninth embodiment can dissipate heat produced by the conversion board 133 to an external environment from the heat dissipation plate 133e with a relatively high thermal conductivity.

Although the heat dissipation plate 133e in the present embodiment is disposed adjacent to the heat producing component 733h, it is to be noted that the present invention is not limited to this. For example, the heat dissipation plate 133e may be disposed in contact with the heat producing component 733h.

### (Tenth Embodiment)

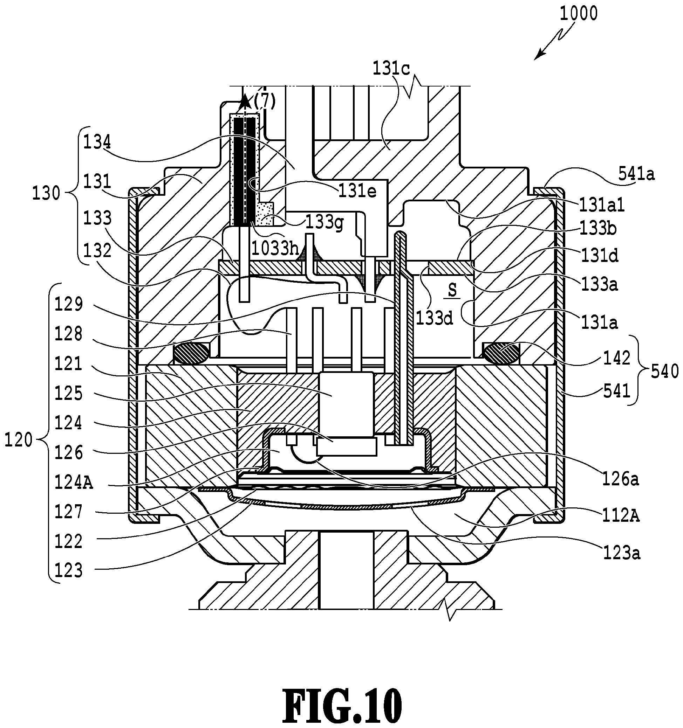

A pressure sensor 1000 according to a tenth embodiment of the present invention is described using Fig. 10. The pressure sensor 1000 according to the tenth embodiment differs from the pressure sensor 700 of the seventh embodiment mainly in that a lead-type heat producing component 1033h is housed in a recess portion 131e of the connector housing 131 and that the thermally conductive adhesive 133g fills in only around the lead-type heat producing component 1033h. The other basic configurations are the same as those of the seventh embodiment. The same members are denoted by the same reference numeral to omit repetitive descriptions.

### <Seventh Heat Dissipation Unit for the Conversion Board (the Lead-Type Heat Producing Component)>

As seventh heat dissipation unit for the conversion board 133, the lead-type heat producing component 1033h is additionally used, forming a heat dissipation path indicated by (7) with a broken line in Fig. 10. Specifically, the lead-type heat producing component 1033h is provided at the board-facing surface 131a1 side. Also, the recess portion 131e having a shape conforming to the lead-type heat producing component 1033h is formed in the connector housing 131. The lead-type heat producing component 1033h is housed in this recess portion 13 1e, and the thermally conductive adhesive 133g fills in only a gap between the recess portion 131e and the lead-type heat producing component 1033h. Thus, the tenth embodiment actively increases the surface area of the heat producing component 1033h compared to the surface-mount-type heat producing component 733h in the seventh embodiment so that heat can be dissipated more efficiently to an external environment via the thermally conductive adhesive 133g. Also, because the lead-type heat producing component 1033h is mounted on the conversion board 133 via a lead wire, a heat producing portion of the heat producing component 1033h is physically spaced away from the conversion board 133, which can consequently inhibit the electronic component of the conversion board 133 from reaching and exceeding its withstanding temperature.

Although the thermally conductive adhesive 133g in the present embodiment fills in only around the lead-type heat producing component 1033h, it is to be noted that the present invention is not limited to this. For example, the adhesive 133g may fill in a gap between the conversion board 133 and the board-facing surface 131a1. Also, although the lead-type heat producing component 1033h and the recess portion 131e have a gap therebetween to be filled with the thermally conductive adhesive 133g in the present embodiment, the present invention is not limited to this. For example, the lead-type heat producing component 1033h and the recess portion 131e may be in contact with each other.

### <Other>

The present invention is not limited to the modes and embodiments described above and modifications described throughout the above description, and can be changed or modified appropriately without departing from the technical concept of the present invention. Specifically, combining the first to tenth embodiments of the present invention are allowed as long as it is possible.

### Reference Signs List

- 110 100, 200, 300, 400, 500, 600, 700, 900, 1000: pressure sensor fluid introduction unit
- 111: coupling member
- 112: base plate
- 120: pressure detection unit
- 121: housing
- 122: diaphragm
- 123: protection cover
- 124: hermetic glass
- 124A: liquid seal chamber
- 125: support
- 126: semiconductor sensor chip
- 127: potential adjustment member
- 128: lead pin
- 129: oil filling pipe
- 130: signal delivery unit
- 131: connector housing
- 131a: board housing portion
- 131a1: board-facing surface
- 131b: connector connection portion
- 131c: partition wall portion
- 131d: step portion
- 131e: recess portion
- 132: flexible wire-connection material
- 133: conversion board
- 133a: first-end surface
- 133b: second-end surface
- 133c: side surface
- 133d: opening portion
- 133e: heat dissipation plate
- 133g: thermally conductive adhesive
- 133h, 333h, 733h, 833h, 1033h: heat producing component
- 134: connection terminal
- 140: connection member
- 141, 541: swaging plate
- 142: O-ring
- 233p: heat dissipation pattern circuit
- 331c1: through-hole
- 433w: waterproofing insulting agent
- 651: thermally emissive resin sheet
- 652: thermally emissive adhesive
- C: center axis
- L: distance between the conversion board and the housing in the center axis direction
- S: internal space

## Claims

1. A pressure sensor comprising:
a fluid introduction unit that introduces a fluid targeted for pressure detection into a pressure chamber;
a pressure detection unit having a semiconductor sensor chip that detects pressure of the fluid introduced into the pressure chamber and a plurality of lead pins connected to the semiconductor sensor chip and forming external input and output terminals of the semiconductor sensor chip; and
a signal delivery unit having a connector housing, a conversion board, and connection terminals, the connector housing having a board housing portion defining an internal space at a first-end side, a connector connection portion at a second-end side, and a partition wall portion between the board housing portion and the connector connection portion, wherein
heat dissipation unit for the conversion board includes
the connector housing in which the conversion board is in direct or indirect thermal contact with a board-facing surface located at a second end of the board housing portion and
the connection terminals whose first-end side is connected to the conversion board and whose second-end side extends into the connector connection portion through the partition wall portion, and
heat migration inhibition unit for the conversion board includes the internal space interposed between the conversion board and the pressure detection unit.

2. The pressure sensor according to claim 1, wherein
as the heat dissipation unit for the conversion board, the conversion board is fixed to the board-facing surface.

3. The pressure sensor according to claim 2, wherein
the heat dissipation unit for the conversion board further includes a heat dissipation pattern circuit formed at least on the board-facing surface side of the conversion board.

4. The pressure sensor according to claim 2 or 3, wherein
the partition wall portion has a through-hole that allows the board housing portion and the connector connection portion to communicate with each other,
a heat producing component of the conversion board is provided on the board-facing surface side, and
the heat dissipation unit for the conversion board further includes the through-hole in which the heat producing component is disposed.

5. The pressure sensor according to claim 4, wherein
the through-hole is closed by a waterproofing insulating agent, and
the heat producing component is covered by the waterproofing insulating agent.

6. The pressure sensor according to any one of claims 1 to 5, further comprising a connection member that connects the fluid introduction unit, the pressure detection unit, and the signal delivery unit together, wherein
the heat dissipation unit for the conversion board further includes the connection member disposed to overlap with the conversion board in a view seen in a direction perpendicular to a center axis.

7. The pressure sensor according to claim 1, wherein
a heat producing component of the conversion board is provided on the board-facing surface side, and
the heat dissipation unit for the conversion board includes a thermally conductive adhesive filling in at least a gap between the heat producing component and the connector housing.

8. The pressure sensor according to claim 7, wherein
the heat dissipation unit for the conversion board further includes a plurality of the heat producing components electrically connected in parallel.

9. The pressure sensor according to claim 7 or 8, wherein
the heat dissipation unit for the conversion board further includes a heat dissipation plate whose first-end side is disposed in contact with or adjacent to the heat producing component and whose second-end side extends into the connector connection portion through the partition wall portion.

10. The pressure sensor according to claim 7 or 8, wherein
the heat dissipation unit for the conversion board further includes the heat producing component of a lead type and a recess portion in the connector housing that houses the heat producing component of the lead type.

11. The pressure sensor according to any one of claims 1 to 10, wherein
the signal delivery unit further has a flexible wire-connection material, and
the heat migration inhibition unit for the conversion board includes the flexible wire-connection material connected between the plurality of lead pins and the conversion board in a curved or bent state.

12. The pressure sensor according to any one of claims 1 to 11, wherein
the heat migration inhibition unit for the conversion board further includes a non-metallic resin sheet and/or an adhesive that are thermally emissive and disposed between the pressure detection unit and the signal delivery unit.
